# FASCICULE DE BREVET EUROPEEN

(11) **EP 2 388 195 B1**
(45) Date de publication et mention de la délivrance du brevet: **11.09.2019**
(21) Numéro de dépôt: 11166968.5
(22) Date de dépôt: 20.05.2011
(51) Int. Cl.: B64G 1/50, B82Y 30/00, F28F 21/02, F28F 21/06, F28F 1/22, F28D 15/02

(54) **Dispositif de dissipation thermique pour équipement spatial, notamment pour satellite**
Vorrichtung zur thermischen Dissipation für Raumfahrtausrüstung, insbesondere für Satellit
Thermal dissipation device for space equipment, in particular for satellite

(30) Priorité: 21.05.2010 FR 1002159
(43) Date de publication de la demande: 23.11.2011
(73) Titulaire: Thales, 92400 Courbevoie (FR)
(72) Inventeur: Lutz, Martine, 83600, Fréjus (FR); Vitupier, Yann, 06250, Mougins (FR); Montredon, Florence, 06550, La Roquette-sur-Siagne (FR); Chaix, Alain, 06210, Mandelieu-la-Napoule (FR); Lalande, Hubert, 06150, Cannes-la-Bocca (FR)
(74) Mandataire: Collet, Alain

(56) Documents cités:
- US-A1- 2004 067 364
- US-A1- 2006 219 689
- US-B1- 7 583 506

## Description

La présente invention concerne un dispositif de dissipation thermique pour un équipement spatial, notamment pour une utilisation dans des satellites. Elle s'applique par exemple au domaine du spatial, et plus particulièrement aux satellites de télécommunications, d'observation et scientifiques.

Les dispositifs pour applications spatiales doivent satisfaire des performances de plus en plus sévères. -En ce qui concerne les satellites de télécommunications, ceux-ci embarquent un nombre toujours plus grand d'équipements toujours plus complexes consommant toujours plus d'énergie, partant produisant plus de chaleur. Ainsi, les satellites de télécommunications doivent être capables de dissiper la chaleur produite par les équipements embarqués de manière performante, afin de garantir la pérennité des performances ce ceux-ci. Parallèlement, la multiplicité croissante des équipements embarqués, ainsi que des motifs économiques, imposent aux composants embarqués des contraintes de masse toujours plus sévères.

Les satellites de télécommunications utilisent habituellement des dissipateurs de chaleur sous la forme de panneaux dissipatifs, communément désignés "panneaux Nord - Sud" ou encore "murs Nord - Sud", de par leur disposition particulière sur la surface des satellites. Les murs Nord - Sud sont de manière typique composés de panneaux et de dispositifs de conduction calorifique, ces derniers étant communément désignés caloducs, et habituellement constitués de structures tubulaires mises en réseau et au sein desquelles circule un fluide caloporteur. Pour ce qui concerne la plupart des systèmes de satellites réalisés, la structure des murs Nord - Sud est typiquement réalisée en aluminium. De la même manière, les caloducs sont typiquement réalisés en aluminium. L'aluminium est privilégié car il offre de bonnes caractéristiques de conductivité thermique, ainsi que des propriétés physiques facilitant l'extrusion, procédé de fabrication particulièrement adapté pour l'obtention de pièces de structure tubulaire. En outre, l'aluminium offre des caractéristiques connues de légèreté.

Des satellites de télécommunications peuvent également utiliser des étagères, supportant les équipements et des moyens de transfert thermique permettant un transfert de la chaleur dégagée par les équipements vers des panneaux dissipatifs de type panneaux Nord - Sud par exemple. D'une manière similaire, les composants formant les étagères sont d'une manière privilégiée réalisés en aluminium.

Le brevet americain US 7,583,506 décrit un panneau dissipatif comprenant au moins une peau. La demande de brevet américain US 2004/0067364 décrit une structure composite avec une résine organique chargée de nanotubes de carbone permettant une bonne résistance et conductivité thermique.

En ce qui concerne les satellites d'observation et scientifiques, des missions particulières nécessitant à la fois des structures rigides et des panneaux contrôlés thermiquement par caloducs sont envisageables, notamment pour les explorations des planètes chaudes et du soleil. La présente invention peut également d'appliquer à la définition de telles missions.

Afin de satisfaire au mieux les contraintes précitées, et notamment les contraintes liées à la masse des systèmes, il est envisagé de recourir à des structures alternatives aux structures en aluminium connues. Il est notamment envisagé de recourir à des matériaux composites présentant des masses moindres. Notamment, des structures composites à base de carbone sont envisagées. En effet, les développements récents permettent la réalisation de structures composites contenant des fibres de carbone enrichies en graphite, ou "graphitisées". De telles fibres offrent des caractéristiques très satisfaisantes en terme de conduction thermique. Des structures composites incorporant des fibres de carbone graphitisées sont ainsi envisagées, notamment pour réaliser la structure formant le plan des panneaux Nord - Sud de satellites, pour laquelle de bonnes caractéristiques de conductivité thermique sont recherchées.

Selon des techniques en elles-mêmes connues de l'état de la technique, l'utilisation de fibres de carbone hautement graphitisées peut être assortie à l'emploi d'une deuxième fibre de carbone, de type "haute résistance", palliant la tenue mécanique insuffisante de la première. D'une manière typique, la première fibre, conductrice, peut être disposée de manière sensiblement perpendiculaire à l'axe principal des caloducs, et la seconde fibre, de haute résistance, sensiblement dans le sens de l'axe principal des caloducs. Ainsi, une succession de couches comprenant des fibres de carbone hautement graphitisées, noyées dans une résine, et de couches comprenant des fibres de carbone de haute résistance sensiblement alignées à la perpendiculaire des fibres des couches voisines, peut être réalisée. Il est également possible d'alterner des couches dans lesquelles des fibres de carbones sont disposées selon un alignement faisant un angle déterminé, par exemple de 45°, avec les fibres disposées dans les couches voisines ; une telle configuration, formée par une superposition de couches comprenant des fibres de nature hétérogène, permet de conférer des structures composites dont les propriétés d'isotropie sont améliorées.

Cependant, l'utilisation de fibres hautement graphitisées confère également aux structures dans lesquelles elles s'intègrent, un module de raideur important, ainsi qu'un coefficient de dilatation négatif. Ainsi, des structures incorporant de tels matériaux sont difficiles à réaliser de manière industrielle, et leur mise en oeuvre dans des applications s'avère en pratique très coûteuse.

De plus, l'utilisation de structures composites à base de fibres de carbone graphitisées par exemple pour former le plan des panneaux ou des étagères impose l'utilisation de structures composites essentiellement similaires pour la réalisation des caloducs. En effet, il est souhaitable que les structures des panneaux ou des étagères et des caloducs présentent des caractéristiques similaires, notamment en ce qui concerne la dilatation thermique ou de thermo-élasticité. Les systèmes utilisés dans les applications spatiales sont en effet soumis à de fortes variations de température, entraînant des contraintes mécaniques intenses au niveau des interfaces entre des structures de natures hétérogènes. Or la réalisation de caloducs à base de carbone s'avère très délicate en pratique, puisque le carbone présente une porosité qui n'est pas compatible a priori de la circulation d'un fluide caloporteur. Il est à observer qu'en outre, l'utilisation de fibres de carbone graphitisées amplifie les problèmes d'ordre thermo-élastique, en augmentant le module de raideur des structures.

Enfin, dans des solutions connues de l'état de la technique, les fibres de carbone peuvent par exemple être comprises dans une résine organique, par exemple une résine de type époxyde ; or l'usage d'une résine organique contrecarre l'effet d'amélioration de la conductivité thermique apporté par les fibres de carbone graphitisées. Des solutions connues de l'état de la technique proposent de remplacer les résines organiques par des résines plus conductrices thermiquement ; il s'agit cependant de matériaux qui doivent être élaborés à des températures très élevées, et qui par conséquent imposent des procédés de fabrication très complexes et délicats, partant coûteux à mettre en oeuvre.

Un but de la présente invention est de pallier au moins les inconvénients précités, en proposant un dispositif de dissipation thermique pour application spatiale, notamment pour satellite, comprenant une configuration particulière d'au moins un caloduc et au moins un panneau dissipatif conférant au dispositif de dissipation thermique des caractéristiques optimales de conductivité thermique et de résistance aux contraintes mécaniques et thermo-élastiques, ainsi qu'une masse particulièrement légère.

Un avantage de l'invention est que le dispositif de dissipation thermique selon un des modes de réalisation de l'invention peut être aisément réalisé via des procédés de fabrication habituels.

A cet effet, l'invention a pour objet un dispositif de dissipation thermique, notamment pour application spatiale, comprenant au moins un panneau dissipatif, le panneau dissipatif comprenant au moins une peau réalisée dans une structure composite comprenant une résine organique et des fibres de carbone graphitisées, la résine organique étant chargée de nanotubes de carbone.

Dans un mode de réalisation de l'invention, la structure composite peut être formée par une succession alternée de couches comprenant une première pluralité de fibres de carbone graphitisées disposées suivant un alignement déterminé, et de couches comprenant une deuxième pluralité de fibres de carbone graphitisées disposées suivant un alignement sensiblement perpendiculaire à l'alignement de ladite première pluralité de fibres de carbone graphitisées.

Dans un mode de réalisation de l'invention, la structure composite peut être formée par un tissu réalisé par un enchevêtrement d'une première pluralité de fibres de carbone graphitisées disposées suivant un alignement déterminé, et d'une deuxième pluralité de fibres de carbone graphitisées disposées suivant un alignement sensiblement perpendiculaire à l'alignement de ladite première pluralité de fibres de carbone graphitisées.

Dans un mode de réalisation de l'invention, la peau peut être assemblée à un réseau de caloducs.

Dans un mode de réalisation de l'invention, le panneau dissipatif peut comprendre une peau intérieure et une peau extérieure de forme planaire disposées parallèlement l'une de l'autre et solidarisées via des éléments de structure.

Dans un mode de réalisation de l'invention, les éléments de structure peuvent être formés par une configuration en nid d'abeille de tubes d'aluminium.

Dans un mode de réalisation de l'invention, les éléments de structure peuvent être formés par une mousse conductrice.

Dans un mode de réalisation de l'invention, le réseau de caloducs peut être disposé extérieurement au panneau dissipatif, en surface de la peau intérieure.

Dans un mode de réalisation de l'invention, le réseau de caloducs peut être disposé intérieurement au panneau dissipatif, entre les peaux intérieure et extérieure.

Dans un mode de réalisation de l'invention, le réseau de caloducs peut comprendre un ou une pluralité de caloducs de forme sensiblement tubulaire, réalisés en aluminium.

Dans un mode de réalisation de l'invention, le réseau de caloducs peut comprendre un ou une pluralité de caloducs de forme sensiblement tubulaire, réalisés dans un alliage d'aluminium incorporant des éléments de faible coefficient de dilatation thermique.

Dans un mode de réalisation de l'invention, les éléments incorporés dans l'alliage d'aluminium peuvent être formés par une céramique en carbure de silicium SiC ou bien en nitrure de silicium Si₃N₄.

Dans un mode de réalisation de l'invention, les éléments incorporés dans l'alliage d'aluminium peuvent être formés par du silicium Si.

Dans un mode de réalisation de l'invention, les éléments incorporés dans l'alliage d'aluminium peuvent être formés par une céramique de ZrW₂O₈.

Dans un mode de réalisation de l'invention, les éléments incorporés dans l'alliage d'aluminium peuvent être formés par de la β-eucryptite.

Dans un mode de réalisation de l'invention, l'assemblage des caloducs aux peaux peut être réalisé au moyen de résine organique enrichie de nanotubes de carbone.

La présente invention a également pour objet un panneau dissipatif fixe pour satellite, caractérisé en ce qu'il est formé par au moins un dispositif de dissipation thermique dans un des modes de réalisation décrits ci-dessus.

La présente invention a également pour objet un panneau dissipatif déployable pour satellite, caractérisé en ce qu'il est formé par au moins un dispositif de dissipation thermique dans un des modes de réalisation décrits ci-dessus.

La présente invention a également pour objet une étagère rapportée à un panneau dissipatif pour satellite, caractérisé en ce qu'il est formé par au moins un dispositif de dissipation thermique selon l'un des modes de réalisation décrits ci-dessus.

D'autres caractéristiques et avantages de l'invention apparaîtront à la lecture de la description, donnée à titre d'exemple, faite en regard des dessins annexés qui représentent :
- la figure 1, une vue en perspective illustrant une structure connue de dispositif de dissipation thermique pour un satellite de télécommunication ;
- les figures 2a et 2b, des vues en coupe illustrant la structure d'un dispositif de dissipation thermique comprenant un panneau dissipatif et un réseau de caloducs, dans un premier exemple de réalisation ;
- la figure 3, une vue en coupe illustrant la structure d'un dispositif de dissipation thermique comprenant un panneau dissipatif et un réseau de caloducs, dans un second exemple de réalisation ;
- les figures 4a et 4b, une représentation en coupe de la composition d'un matériau composite formant un panneau dissipatif selon un exemple de réalisation de la présente invention, suivant divers grossissements.

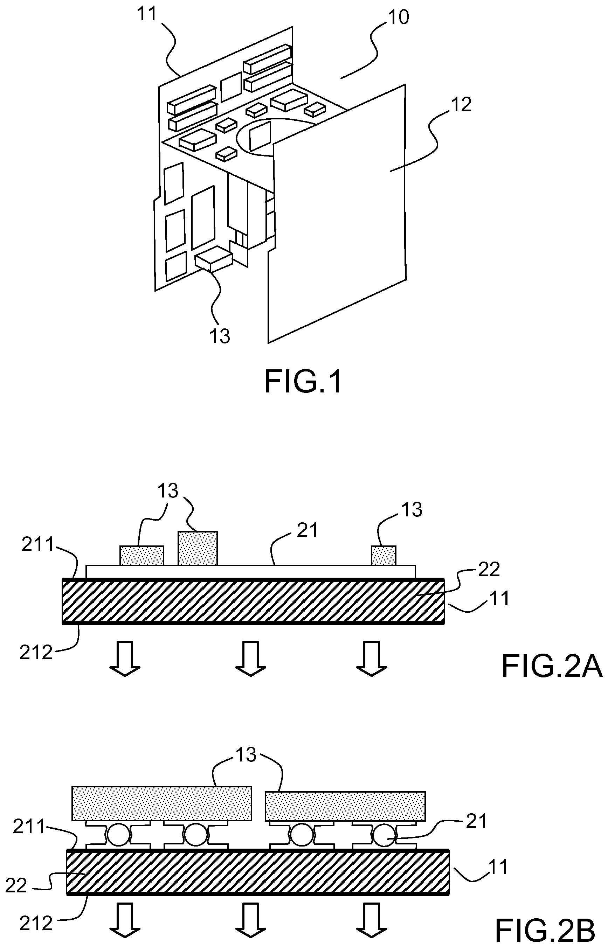

La figure 1 présente une vue en perspective illustrant une structure connue de dispositif de dissipation thermique pour un satellite de télécommunication.

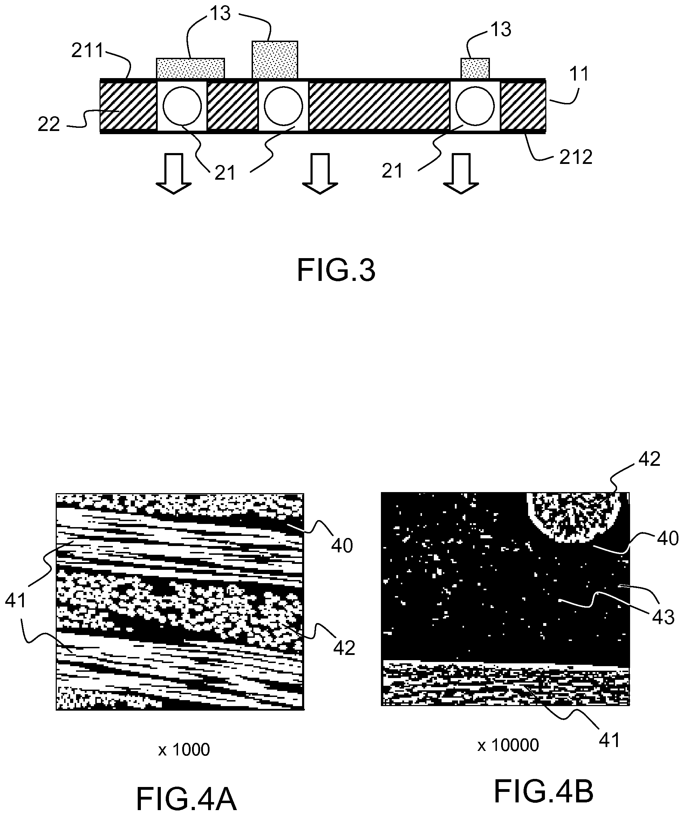

D'une manière typique, un satellite de communication comprend notamment un module de communication 10. Le module de communication 10 comprend une pluralité d'équipements électroniques 13 fortement dissipatifs. Les équipements électroniques 13 sont installés sur des réseaux de caloducs non représentés sur la présente figure, mais décrits en détails ci-après en référence aux figures 2a, 2b et 3. Les équipements électroniques 13 sont disposés à l'intérieur du satellite de communication. Les caloducs sont disposés sur la surface interne de panneaux dissipatifs 11, 12, ou bien à l'intérieur des panneaux dissipatifs 11,12. Les réseaux de caloducs permettent le transport et la répartition de la puissance thermique sur la surface totale des panneaux dissipatifs 11, 12. La surface extérieure des panneaux dissipatifs 11, 12 rayonnent alors cette puissance vers l'espace environnant. Pour un meilleur rayonnement de la puissance thermique, les surfaces extérieures des panneaux dissipatifs 11, 12 sont par exemple couvertes de réflecteurs solaires optiques, communément désignés par le sigle OSR correspondant à la terminologie anglaise "Optical Solar Reflectors". La structure des panneaux Nord- - Sud est décrite en détails ci-après en référence aux figures 2a, 2b et 3.

Les figures 2a et 2b présentent des vues en coupe illustrant la structure d'un dispositif de dissipation thermique comprenant un panneau dissipatif et un réseau de caloducs, dans un premier exemple de réalisation.

Dans le premier exemple de réalisation, un réseau de caloducs comprenant au moins un caloduc 21 peut être disposé à l'intérieur d'un panneau dissipatif 11. Les surfaces intérieure et extérieure du panneau Nord - Sud 11 peuvent être formées par deux structures de surface ou "peaux", respectivement une peau intérieure 211 et une peau extérieure 212, définissant des plans sensiblement parallèles l'un de l'autre. Les peaux 211, 212 peuvent être solidarisées via des éléments structurels 22. Les éléments structurels 22 peuvent par exemple, d'une manière typique, former une structure dite en "nid d'abeille". Les équipements électroniques 13 sont disposés sur le réseau de caloducs 21. Dans l'exemple illustré par la figure 2a, un caloduc de forme essentiellement tubulaire est représenté dans une coupe transversale. Dans l'exemple illustré par la figure 2b, plusieurs sections d'un même caloduc ou bien de plusieurs caloducs, sont représentées dans une vue en coupe transversale. Un fluide caloporteur circule dans les caloducs 21. D'une manière typique dans des applications de type satellites de télécommunication, le fluide caloporteur utilisé est l'ammoniac.

Dans des structures typiques connues de l'état de la technique, les caloducs 21, ainsi que les peaux 211, 212 et les éléments structurels formant les panneaux dissipatifs 11 peuvent être constitués d'aluminium.

La figure 3 est une représentation schématique de la composition d'un panneau dissipatif selon un second exemple de réalisation.

La figure 3 présente une structure de panneau dissipatif 11 en elle-même connue de l'état de la technique, au sein de laquelle sont intégrés les réseaux de caloducs 21, apparaissant dans une coupe transversale dans la figure. Dans une telle structure, les équipements électroniques 13 peuvent être disposés directement sur une peau 211, 212, sensiblement au-dessus des réseaux de caloducs 21, les réseaux de caloducs 21 étant disposés entre les deux peaux 211, 212 du panneau dissipatif 11. De la sorte, les peaux 211, 212 assurent une fonction structurale. D'une manière similaire aux structures décrites ci-dessus en référence aux figures 2a et 2b, des éléments structurels 22 formant par exemple une structure en nid d'abeille, peuvent solidariser l'ensemble.

Dans les différentes configurations typiques décrites ci-dessus, tous les matériaux doivent avoir des propriétés de légèreté et de conductivité thermique. En outre, les matériaux utilisés doivent présenter des caractéristiques physiques telles que la fabrication des pièces composant la structure soit possible et réalisable à moindre coût. Enfin, les matériaux utilisés doivent présentés des caractéristiques, notamment thermo-élastiques, suffisamment homogènes pour que les contraintes s'appliquant particulièrement aux interfaces entre les différents éléments, n'entraînent pas des ruptures ou des altérations remettant en cause les caractéristiques requises précitées. Egalement, ces caractéristiques doivent pouvoir être préservées sur toute la durée de vie des dispositifs, typiquement de plus de quinze années pour des applications spatiales. Pour tous ces motifs, des matériaux en aluminium sont largement utilisés, pour tous les éléments constituant les panneaux dissipatifs, c'est-à-dire les réseaux de caloducs 21, les peaux 211, 212 et les éléments structurels 22.

La présente invention peut indifféremment s'appliquer à différentes configurations de panneaux dissipatifs, au sein ou à l'extérieur desquels sont disposés des réseaux de caloducs, telles que par exemple les configurations décrites ci-dessus en référence aux figures 2a, 2b et 3. La présente invention propose d'employer une structure à base d'un matériau composite pour les peaux 211, 212, cette structure offrant notamment à la fois des caractéristiques améliorées de légèreté et de conductivité thermique adaptées aux applications spatiales. Plus précisément, la présente invention propose d'employer pour les peaux 211, 212, une structure de type tissu de carbone, c'est-à-dire comprenant une résine organique, par exemple de type époxyde, chargée de fibres de carbone. Les fibres de carbone sont des fibres graphitisées, par exemple de type "ex-brai", apportant des caractéristiques de conductivité thermique à la résine, cette dernière étant par nature thermiquement non-conductrice. Il est par exemple possible de former la charge de fibres de carbone par des nano-fibres de carbone multi-parois, habituellement désignées par le sigle MWNT correspondant à la terminologie anglaise "Multi Wall Nano Tube". Ces nano-fibres peuvent par exemple avoir une dimension approximative de 80 nanomètres, et peuvent être purifiées, les impuretés issues du mode d'élaboration des nano-fibres empêchant la circulation des flux de chaleur. La purification des nano-fibres peut être réalisée par un traitement thermique, et permet d'augmenter le degré d'alignement des couches de graphène et diminuer l'espace entre ces couches, ce qui augmente l'efficacité du transport des phonons et des électrons à l'origine de l'augmentation de la conductivité thermique. La conductivité thermique d'un matériau résulte en effet de la somme de plusieurs formes de conductions thermiques. Chaque forme de conduction thermique est liée à un type de porteurs de chaleur, ou charges. Ces charges sont principalement des phonons acoustiques et optiques, liés aux ondes mécaniques du réseau induites par la vibration des atomes. Le taux de charge en nano-fibres peut par exemple être de l'ordre de 5 à 15%.

Afin de diminuer les exigences de conductivité thermique imposées aux fibres de carbones, et partant dans le but de diminuer leur module de raideur, la présente invention propose de conférer à la résine organique une meilleur conductivité thermique. Pour ce faire, la présente invention propose de charger la résine organique de nanotubes de carbone, afin de conférer aux peaux 211, 212 une bonne conductivité thermique dans le plan. Il est par exemple possible d'incorporer des nanotubes de carbone à une résine industrielle déjà qualifiée pour des applications spatiales. La composition de la résine est décrite en détails ci-après en référence aux figures 4a et 4b. Ainsi, la présente invention permet un couplage judicieux entre les fibres de carbone ex-brai hautement graphitisées, avec les nano-tubes de carbone, ce couplage permettant un compromis entre de bonnes caractéristiques de conductivité thermique et un module de raideur raisonnablement élevé.

Avantageusement, il est possible de charger la résine organique en nanotubes de carbone afin que la conductivité thermique de la structure composite dans le plan des peaux 211, 212, soit proche de la conductivité thermique de l'aluminium, et d'utiliser de ce fait des caloducs à base d'aluminium, par exemple présentant des structures en elles-mêmes déjà connues de l'état de la technique, sans que l'hétérogénéité fondamentale des matériaux utilisés n'ait pour conséquence des différences fondamentales en terme de conductivité thermique. Par exemple, le chargement de la résine peut être réalisé par des nanotubes de carbone hautement purifiés. Le degré d'impuretés dans les nanotubes peut en effet avoir des conséquences importantes sur leurs propriétés. Il est par exemple possible de recourir à des nanofibres hautement purifiées par un traitement thermique à haute température, permettant d'augmenter le degré d'alignement des couches de graphène et de diminuer l'espace entre ces couches, de manière à augmenter l'efficacité du transport des phonons et des électrons à l'origine de l'augmentation de la conductivité thermique. Le taux de charge peut par exemple être choisi du même ordre que le seuil de percolation de la résine, c'est-à-dire le taux pour lequel la conductivité thermique atteint une asymptote. Le taux de charge peut ainsi par exemple être choisi de l'ordre de 10%.

Avantageusement encore, il est possible de conférer à la structure à base d'aluminium formant les caloducs 21, un coefficient de dilatation thermique suffisamment proche du coefficient de dilatation thermique de la structure composite formant les peaux 211, 212, afin que l'hétérogénéité fondamentale des matériaux utilisés n'ait pas pour conséquence des contraintes thermo-élastiques plus importantes, par exemple sous l'effet de variations importantes de la température. A cette fin, il est par exemple possible d'employer également un matériau composite pour former les caloducs 21. Le matériau composite ne doit pas nuire à la facilité de mise en oeuvre industrielle. Notamment, il est possible de recourir à des alliages composites permettant de conserver les principaux avantages procurés par l'aluminium, c'est-à-dire une faible densité et une bonne conductivité thermique, avec un coefficient de dilatation thermique réduit. Il est par exemple possible de recourir à un alliage à base d'aluminium, et d'additifs présentant un faible coefficient de dilatation thermique. Plus précisément, il est par exemple possible de recourir à des additifs tels que des céramiques en carbure de silicium SiC ou bien en nitrure de silicium Si₃N₄, ou bien du silicium métallique Si, dont les coefficients de dilatation thermique varient typiquement entre 1 et 2,5 ppm/°C à température ambiante. Il est également possible d'envisager toutes sortes d'additifs connus offrant des coefficients de dilatation thermique de cet ordre voire d'ordre inférieur, et dont l'incorporation dans de l'aluminium est raisonnablement envisageable. Il est notamment possible d'envisager de recourir à des additifs présentant un coefficient de dilatation thermique négatif, tels que par exemple des céramiques à base de ZrW₂O₈, ou bien de la β-eucryptite. Le caractère extrudable de l'alliage à base d'aluminium peut être modulé via une adaptation de la granulométrie de la charge en additifs. Il est par exemple possible d'incorporer à de l'aluminium, des particules submicroniques voire nanométriques de carbure de silicium SiC afin de renforcer le caractère extrudable de l'alliage. Par exemple, il est possible d'envisager une proportion de 20 à 30% de carbure de silicium dans l'alliage. Le choix d'un alliage en aluminium à en outre l'avantage de conférer aux caloducs 21 une compatibilité à long terme avec l'ammoniac, lorsqu'il s'agit du fluide caloporteur qu'ils renferment.

Avantageusement encore, il est possible de mettre à profit le caractère auto-adhésif de la résine chargée en nanotubes de carbones, et de l'utiliser par exemple comme adhésif, notamment entre les caloducs 21 et les peaux 211, 212. Ce mode de réalisation présente l'avantage d'assurer une homogénéité entre les éléments constituant le panneau dissipatif, et les éléments assurant l'assemblage de ceux-ci.

Avantageusement encore, il est possible de substituer les éléments structurels 22, par une mousse conductrice légère. Une mousse peut alors être utilisée pour positionner le caloduc 21 dans le panneau dissipatif 11, 12. Il est par exemple possible de choisir une mousse thermiquement conductrice, offrant un bon contact avec le caloduc 21, et de faible densité. Il est ainsi par exemple possible d'utiliser une mousse mixte aluminium époxy ou carbone. Un tel mode de réalisation permet un gain en légèreté, ainsi qu'un gain en conductivité thermique transverse, c'est-à-dire dans l'épaisseur du panneau dissipatif.

Il est à observer que les dispositifs de dissipation thermique présentés dans les différents modes de réalisation donnés à titre d'exemples et décrits précédemment, peuvent former des panneaux dissipatifs, ou également des structures rapportées à des panneaux dissipatifs, telles que des étagères.

Egalement, les dispositifs de dissipation thermique selon les différents modes de réalisation présentés, peuvent non seulement former des panneaux dissipatifs fixes, mais aussi être compris dans des panneaux dissipatifs déployables. Des structures de panneaux dissipatifs déployables sont en elles-mêmes connues de l'état de la technique. Les panneaux dissipatifs déployables peuvent être stockés dans une configuration "repliée" pendant la phase de lancement d'un satellite, et déployés une fois le satellite en orbite, permettant d'augmenter significativement la surface radiative globale du satellite. Un circuit de caloducs ou de tubes lisses peut être monté sur le panneau dissipatif déployable, et un système de boucles fluides peut être connecté sur le panneau dissipatif, par exemple via une structure tubulaire en acier inoxydable, compatible du faible coefficient de dilatation thermique du panneau dissipatif.

Les figures 4a et 4b présentent chacune une représentation en coupe de la composition d'un matériau composite formant un panneau dissipatif selon un exemple de réalisation de la présente invention, suivant divers grossissements.

La figure 4a illustre une représentation en coupe de la composition du matériau composite, avec un grossissement de l'ordre de 1000 fois. Dans l'exemple illustré par les figures 4a et 4b, le matériau composite peut être formé au sein d'une résine 40, par une alternance d'une couche composée d'une première pluralité de fibres de carbone 41, les fibres étant disposées sensiblement dans le sens de l'axe principal des caloducs, et d'une couche composée d'une deuxième pluralité de fibres de carbone 42, les fibres étant disposées sensiblement de manière perpendiculaire à la pluralité de fibres de carbone 41.Un avantage procuré par cet exemple de mode de réalisation, est que les différentes couches constituant la structure composite, sont de nature homogène. En effet, l'usage conjoint des fibres de carbone et de la résine chargée permet d'obtenir le meilleur compromis des caractéristiques de conductivité thermique, de dilatation, de raideur et de tenue mécanique.

Egalement, dans un autre mode de réalisation de l'invention, il est possible de disposer les fibres de carbone 41, 42 sous la forme d'un tissu, le tissu étant formé par un enchevêtrement de la première pluralité de fibres de carbone 41, alors disposées en "chaîne" et de la deuxième pluralité de fibres de carbone 42, alors disposées en "trame", les deux pluralités de fibres de carbone 41, 42 étant sensiblement disposées suivant des alignements perpendiculaires. Une structure tissulaire permet un gain en terme d'épaisseur, et partant en termes de masse et d'encombrement.

Egalement, dans le but de conférer à la structure composite de meilleures propriétés d'isotropie, il est possible de disposer des fibres de carbone suivant des alignements présentant des angles déterminés, par exemple de 45°, entre différentes couches successives, voire au sein d'une structure tissulaire.

La figure 4b illustre une représentation en coupe de la composition du matériau composite, avec un grossissement de l'ordre de 10000 fois. Dans l'exemple illustré par la figure 4b, au sein de la résine 40, une pluralité de fibres de carbone en chaîne 41 est également visible, ainsi qu'une des fibres de carbone en trame 42. En outre, des nanotubes de carbone 43 chargent la résine 40.

## Revendications

1. Dispositif de dissipation thermique pour satellite spatial, comprenant au moins un panneau dissipatif (11, 12), le panneau dissipatif (11, 12) comprenant au moins une peau (211, 212), **caractérisé en ce que** la peau (211, 212) est réalisée dans une structure composite comprenant une résine organique et des fibres de carbone graphitisées, et **en ce que** la résine organique est chargée de nanotubes de carbone.

2. Dispositif de dissipation thermique selon la revendication 1, **caractérisé en ce que** la structure composite est formée par une succession alternée de couches comprenant une première pluralité de fibres de carbone graphitisées (41) disposées suivant un alignement déterminé, et de couches comprenant une deuxième pluralité de fibres de carbone graphitisées (42) disposées suivant un alignement sensiblement perpendiculaire à l'alignement de ladite première pluralité de fibres de carbone graphitisées (41).

3. Dispositif de dissipation thermique selon la revendication 1, **caractérisé en ce que** la structure composite est formée par un tissu réalisé par un enchevêtrement d'une première pluralité de fibres de carbone graphitisées (41) disposées suivant un alignement déterminé, et d'une deuxième pluralité de fibres de carbone graphitisées (42) disposées suivant un alignement sensiblement perpendiculaire à l'alignement de ladite première pluralité de fibres de carbone graphitisées (41).

4. Dispositif de dissipation thermique selon l'une quelconque des revendications précédentes, **caractérisé en ce que** la peau (211, 212) est assemblée à un réseau de caloducs (21).

5. Dispositif de dissipation thermique selon l'une quelconque des revendications précédentes, **caractérisé en ce que** le panneau dissipatif (11, 12) comprend une peau intérieure (211) et une peau extérieure (212) de forme planaire disposées parallèlement l'une de l'autre et solidarisées via des éléments de structure (22).

6. Dispositif de dissipation thermique selon la revendication 5, **caractérisé en ce que** les éléments de structure (22) sont formés par une configuration en nid d'abeille de tubes d'aluminium.

7. Dispositif de dissipation thermique selon la revendication 5, **caractérisé en ce que** les éléments de structure (22) sont formés par une mousse conductrice.

8. Dispositif de dissipation thermique selon l'une quelconque des revendications 5 à 7, **caractérisé en ce que** le réseau de caloducs (21) est disposé extérieurement au panneau dissipatif (11, 12), en surface de la peau intérieure (211).

9. Dispositif de dissipation thermique selon l'une quelconque des revendications 5 à 7, **caractérisé en ce que** le réseau de caloducs (21) est disposé intérieurement au panneau dissipatif (11, 12), entre les peaux intérieure (211) et extérieure (212).

10. Dispositif de dissipation thermique selon l'une quelconque des revendications précédentes, **caractérisé en ce que** le réseau de caloducs (21) comprend un ou une pluralité de caloducs de forme sensiblement tubulaire, réalisés en aluminium.

11. Dispositif de dissipation thermique selon l'une quelconque des revendications précédentes, **caractérisé en ce que** le réseau de caloducs (21) comprend un ou une pluralité de caloducs de forme sensiblement tubulaire, réalisés dans un alliage d'aluminium incorporant des éléments de faible coefficient de dilatation thermique.

12. Dispositif de dissipation thermique selon la revendication 11, **caractérisé en ce que** les éléments incorporés dans l'alliage d'aluminium sont formés par une céramique en carbure de silicium SiC ou bien en nitrure de silicium Si₃N₄.

13. Dispositif de dissipation thermique selon la revendication 11, **caractérisé en ce que** les éléments incorporés dans l'alliage d'aluminium sont formés par du silicium Si.

14. Dispositif de dissipation thermique selon la revendication 11, **caractérisé en ce que** les éléments incorporés dans l'alliage d'aluminium sont formés par une céramique de ZrW₂O₈.

15. Dispositif de dissipation thermique selon la revendication 11, **caractérisé en ce que** les éléments incorporés dans l'alliage d'aluminium sont formés par de la β-eucryptite.

16. Dispositif de dissipation thermique selon l'une quelconque des revendications 8 à 15, **caractérisé en ce que** l'assemblage des caloducs (21) aux peaux (211, 212) est réalisé au moyen de résine organique enrichie de nanotubes de carbone.

17. Panneau dissipatif (11, 12) fixe pour satellite, **caractérisé en ce qu'**il est formé par au moins un dispositif de dissipation thermique selon l'une quelconque des revendications précédentes.

18. Panneau dissipatif (11, 12) déployable pour satellite, **caractérisé en ce qu'**il est formé par au moins un dispositif de dissipation thermique selon l'une quelconque des revendications 1 à 16.

19. Etagère rapportée à un panneau dissipatif (11, 12) pour satellite, **caractérisé en ce qu'**il est formé par au moins un dispositif de dissipation thermique selon l'une quelconque des revendications 1 à 16.

## Patentansprüche

1. Vorrichtung zur thermischen Dissipation für einen Weltraumsatelliten, welche mindestens ein Dissipationspaneel (11, 12) beinhaltet, wobei das Dissipationspaneel (11, 12) mindestens eine Haut (211, 212) beinhaltet, **dadurch gekennzeichnet, dass** die Haut (211, 212) aus einer Verbundstruktur besteht, welche ein organisches Harz und graphitisierte Kohlenstofffasern beinhaltet, und dadurch, dass das organische Harz als Füllstoff Kohlenstoff-Nanoröhrchen enthält.

2. Vorrichtung zur thermischen Dissipation nach Anspruch 1, **dadurch gekennzeichnet, dass** die Verbundstruktur aus einer abwechselnden Abfolge von Schichten gebildet ist, welche eine erste Vielzahl von graphitisierten Kohlenstofffasern (41) beinhalten, welche entsprechend einer bestimmten Flucht angeordnet sind, und von Schichten, welche eine zweite Vielzahl von graphitisierten Kohlenstofffasern (42) beinhalten, welche entsprechend einer Flucht angeordnet sind, welche im Wesentlichen rechtwinklig zur Flucht der ersten Vielzahl von graphitisierten Kohlenstofffasern (41) ist.

3. Vorrichtung zur thermischen Dissipation nach Anspruch 1, **dadurch gekennzeichnet, dass** die Verbundstruktur aus einem Gewebe gebildet ist, welches durch eine Verflechtung einer ersten Vielzahl von graphitisierten Kohlenstofffasern (41) gebildet ist, welche entsprechend einer bestimmten Flucht angeordnet sind, und einer zweiten Vielzahl von graphitisierten Kohlenstofffasern (42), welche entsprechend einer Flucht angeordnet sind, welche im Wesentlichen rechtwinklig zur Flucht der ersten Vielzahl von graphitisierten Kohlenstofffasern (41) ist.

4. Vorrichtung zur thermischen Dissipation nach einem der vorhergehenden Ansprüche, **dadurch gekennzeichnet, dass** die Haut (211, 212) an einem Netz von Wärmerohren (21) montiert ist.

5. Vorrichtung zur thermischen Dissipation nach einem der vorhergehenden Ansprüche, **dadurch gekennzeichnet, dass** das Dissipationspaneel (11, 12) eine innere Haut (211) und eine äußere Haut (212) planarer Form beinhaltet, welche parallel zueinander angeordnet sind und über Strukturelemente (22) fest miteinander verbunden sind.

6. Vorrichtung zur thermischen Dissipation nach Anspruch 5, **dadurch gekennzeichnet, dass** die Strukturelemente (22) aus einer Bienenwabenkonfiguration aus Aluminiumrohren gebildet sind.

7. Vorrichtung zur thermischen Dissipation nach Anspruch 5, **dadurch gekennzeichnet, dass** die Strukturelemente (22) aus einem leitfähigen Schaum gebildet sind.

8. Vorrichtung zur thermischen Dissipation nach einem der Ansprüche 5 bis 7, **dadurch gekennzeichnet, dass** das Netz von Wärmerohren (21) außen am Dissipationspaneel (11, 12), an der Oberfläche der inneren Haut (211) angeordnet ist.

9. Vorrichtung zur thermischen Dissipation nach einem der Ansprüche 5 bis 7, **dadurch gekennzeichnet, dass** das Netz von Wärmerohren (21) innen am Dissipationspaneel (11, 12), zwischen der inneren Haut (211) und der äußeren Haut (212) angeordnet ist.

10. Vorrichtung zur thermischen Dissipation nach einem der vorhergehenden Ansprüche, **dadurch gekennzeichnet, dass** das Netz von Wärmerohren (21) ein oder mehrere im Wesentlichen rohrförmige Wärmerohre aus Aluminium beinhaltet.

11. Vorrichtung zur thermischen Dissipation nach einem der vorhergehenden Ansprüche, **dadurch gekennzeichnet, dass** das Netz von Wärmerohren (21) ein oder mehrere im Wesentlichen rohrförmige Wärmerohre aus einer Aluminiumlegierung beinhaltet, welche Elemente mit geringem Wärmedehnungskoeffizient beinhaltet.

12. Vorrichtung zur thermischen Dissipation nach Anspruch 11, **dadurch gekennzeichnet, dass** die in der Aluminiumlegierung enthaltenen Elemente aus einer Keramik aus Siliziumkarbid SiC oder aus Siliziumnitrid Si₃N₄ gebildet sind.

13. Vorrichtung zur thermischen Dissipation nach Anspruch 11, **dadurch gekennzeichnet, dass** die in der Aluminiumlegierung enthaltenen Elemente aus Silizium Si gebildet sind.

14. Vorrichtung zur thermischen Dissipation nach Anspruch 11, **dadurch gekennzeichnet, dass** die in der Aluminiumlegierung enthaltenen Elemente aus einer ZrW₂O₈-Keramik gebildet sind.

15. Vorrichtung zur thermischen Dissipation nach Anspruch 11, **dadurch gekennzeichnet, dass** die in der Aluminiumlegierung enthaltenen Elemente aus β-Eucryptit gebildet sind.

16. Vorrichtung zur thermischen Dissipation nach einem der Ansprüche 8 bis 15, **dadurch gekennzeichnet, dass** die Montage der Wärmerohre (21) an den Häuten (211, 212) mithilfe eines organischen Harzes erfolgt, welches mit Kohlenstoff-Nanoröhrchen angereichert ist.

17. Festes Dissipationspaneel (11, 12) für einen Satelliten, **dadurch gekennzeichnet, dass** es aus mindestens einer thermischen Dissipationsvorrichtung nach einem der vorhergehenden Ansprüche gebildet ist.

18. Entfaltbares Dissipationspaneel (11, 12) für einen Satelliten, **dadurch gekennzeichnet, dass** es aus mindestens einer thermischen Dissipationsvorrichtung nach einem der Ansprüche 1 bis 16 gebildet ist.

19. An ein Dissipationspaneel (11, 12) für einen Satelliten angebautes Regal, **dadurch gekennzeichnet, dass** es aus mindestens einer thermischen Dissipationsvorrichtung nach einem der Ansprüche 1 bis 16 gebildet ist.

## Claims

1. A device for dissipating heat for a space-based satellite, comprising at least one dissipating panel (11, 12), the dissipating panel (11, 12) comprising at least one skin (211, 212), **characterized in that** the skin (211, 212) is produced in a composite structure comprising an organic resin and graphitised carbon fibres, and **in that** the organic resin is filled with carbon nanotubes.

2. The device for dissipating heat as claimed in claim 1, **characterized in that** the composite structure is formed by an alternating succession of layers comprising a first plurality of graphitised carbon fibres (41), placed according to a defined alignment, and layers comprising a second plurality of graphitised carbon fibres (42), placed according to an alignment substantially perpendicular to the alignment of said first plurality of graphitised carbon fibres (41).

3. The device for dissipating heat as claimed in claim 1, **characterized in that** the composite structure is formed by a fabric produced by entangling a first plurality of graphitised carbon fibres (41), placed according to a defined alignment, and a second plurality of graphitised carbon fibres (42), placed according to an alignment substantially perpendicular to the alignment of said first plurality of graphitised carbon fibres (41).

4. The device for dissipating heat as claimed in any one of the preceding claims, **characterized in that** the skin (211, 212) is assembled to a network of heat pipes (21).

5. The device for dissipating heat as claimed in any one of the preceding claims, **characterized in that** the dissipating panel (11, 12) comprises a planar internal skin (211) and a planar external skin (212) placed parallel to each other and rigidly connected by structural elements (22).

6. The device for dissipating heat as claimed in claim 5, **characterized in that** the structural elements (22) are formed by a honeycomb configuration of aluminium tubes.

7. The device for dissipating heat as claimed in claim 5, **characterized in that** the structural elements (22) are formed from conductive foam.

8. The device for dissipating heat as claimed in any one of claims 5 to 7, **characterized in that** the network of heat pipes (21) is placed externally to the dissipating panel (11, 12), on the surface of the internal skin (211).

9. The device for dissipating heat as claimed in any one of claims 5 to 7, **characterized in that** the network of heat pipes (21) is placed internally to the dissipating panel (11, 12), between the internal skin (211) and the external skin (212).

10. The device for dissipating heat as claimed in any one of the preceding claims, **characterized in that** the network of heat pipes (21) comprises one or a plurality of substantially tubular, aluminium heat pipes.

11. The device for dissipating heat as claimed in any one of the preceding claims, **characterized in that** the network of heat pipes (21) comprises one or a plurality of substantially tubular heat pipes formed from an aluminium alloy incorporating elements having low coefficients of thermal expansion.

12. The device for dissipating heat as claimed in claim 11, **characterized in that** the elements incorporated in the aluminium alloy are formed from a ceramic made of silicon carbide SiC or else of silicon nitride Si₃N₄.

13. The device for dissipating heat as claimed in claim 11, **characterized in that** the elements incorporated in the aluminium alloy are formed from silicon Si.

14. The device for dissipating heat as claimed in claim 11, **characterized in that** the elements incorporated in the aluminium alloy are formed from a ZrW₂O₈ ceramic.

15. The device for dissipating heat as claimed in claim 11, **characterized in that** the elements incorporated in the aluminium alloy are formed from β-eucryptite.

16. The device for dissipating heat as claimed in any one of claims 8 to 15, **characterized in that** the heat pipes (21) are assembled to the skins (211, 212) by means of carbon-nanotube-enriched organic resin.

17. A fixed dissipating panel (11, 12), for a satellite, **characterized in that** it is formed by at least one heat-dissipating device as claimed in any one of the preceding claims.

18. A deployable dissipating panel (11, 12) for a satellite, **characterized in that** it is formed by at least one heat-dissipating device as claimed in any one of claims 1 to 16.

19. A rack joined to a dissipating panel (11, 12), for a satellite, **characterized in that** it is formed by at least one heat-dissipating device as claimed in any one of claims 1 to 16.
